(19)

**Europäisches Patentamt**
**European Patent Office**
**Office européen des brevets**

(11) **EP 1 811 694 A1**

(12) **EUROPEAN PATENT APPLICATION**

(43) Date of publication:
25.07.2007 Bulletin 2007/30

(51) Int Cl.:
*H04B 10/08* (2006.01)  *G01M 11/00* (2006.01)

(21) Application number: 06447014.9

(22) Date of filing: 24.01.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: Faculté Polytechnique de Mons
7000 Mons (BE)

(72) Inventor: Wuilpart, Marc
1420 Braine-L'Alleud (BE)

(74) Representative: Van Malderen, Joëlle
pronovem - Office Van Malderen
Avenue Josse Goffin 158
1082 Bruxelles (BE)

(54) **Method for characterising an optical fibre link**

(57) The present invention is related to a method for characterising an optical fibre link by its beat length, coupling length and polarisation mode dispersion distribution, comprising the steps of :
- sending a pulsed signal along the optical fibre link and measuring the backscattered signal, after passing through a polariser,
- deriving the mean value of the backscattered signal and the number of times the backscattered signal crosses the mean value,

- determining an estimation of the coupling length, taking into account the length of the optical fibre link,
- dividing the backscattered signal in a plurality of sections, deriving for each section the section mean value and the number of times $N_i$ said section mean value is crossed in the section and calculating the sum of the $N_i$ of the various sections of the plurality of sections,
- determining an estimation of the beat length from the information derived in the previous step and from the estimated coupling length,
- calculating the polarisation mode dispersion.

Fig.4

**Description**

**Field of the invention**

The present invention relates to a method for characterising an optical fibre link by analysis of a Rayleigh backscatter signal.

**State of the art**

The use of dispersion-shifted and dispersion compensating fibres has minimised the effect of chromatic dispersion on the bandwidth of an optical link. Polarisation mode dispersion (PMD) has therefore become the most serious limiting factor in high-speed optical communication systems. There exist several measurement techniques of PMD, but they only allow for measuring the global value and do not give information about the distribution of PMD along the fibre length. Measuring the spatial distribution of PMD is, however, important. Such a measurement would indeed allow locating the bad trunks in an optical link causing high PMD value. This can be essential information in the frame of a network maintenance and upgrade.

The PMD of a fibre depends on two parameters: the beat length ($L_B$) and the coupling length ($L_C$). The beat length depends on the birefringence of the fibre and the coupling length is related to the phenomenon of polarisation mode coupling. Measuring the spatial distribution of PMD therefore consists of measuring the distribution of both the beat and coupling lengths.

Most of the techniques proposed for measurement of the distributed PMD are based on polarisation-optical time domain reflectometry (POTDR). The concept of POTDR was introduced by A. Rogers in the 80's (see A. Rogers, 'Polarization-optical time domain reflectometry: a technique for the measurement of field distributions', Applied Optics, vol. 20, pp. 1060-1074, 1981). It basically consists of measuring the polarisation properties of the Rayleigh backscatter signal when an optical pulse propagates down the fibre. Some POTDR-based techniques for PMD characterisation have been developed since. Most of them allow a measurement of the beat length distribution along an optical link and, therefore, do not allow the complete determination of the PMD. However, Sunnerud presented a POTDR-based set-up enabling the measurement of the accumulation of PMD along the fibre (see H. Sunnerud et al., 'Polarization-Mode Dispersion measurements along installed optical fibers using gated backscattered light and a polarimeter', J. of Lightwave Technol., vol. 18, pp. 897-904, 2000). This method requires POTDR measurements at several wavelengths.

A technique based on the measurement of the degree of polarisation by using a POTDR set-up has also been presented in 'Distributed detection of high-PMD sections on installed fibers using a polarization-OTDR', M. Leblanc, Proc. OFMC'01, pp. 155-162, 2001, and is related to the patent application US 2003/0174312. This technique does not allow quantification of the PMD, but enables to obtain distributed information about the level of PMD. Moreover this technique requires the complete measurement of the state of polarisation of the backscattered signal. More recently, Galtarossa described another technique for the PMD measurement for which the coupling length is determined from the correlation of the birefringence vector (see 'Measurement of birefringence correlation length in long, single-mode fibers', Galtarossa et al., Opt. Lett., vol. 26, pp. 962-964, 2001), which also requires the measurement of the polarisation states of the backscattered signal. Moreover, this technique requires a quite short duration of the pulses launched in the optical fibre: 5-10 ns.

In 'Polarization mode dispersion mapping in optical fibers with a Polarization-OTDR', M. Wuilpart, G. Ravet, P. Mégret and M. Blondel, Photon. Technol. Lett., vol. 14, pp. 1716-1718, 2002, the authors describe an analysis of the POTDR signal which allows a mapping of the PMD along an optical fibre link by quantifying the PMD on each fibre of the link. The main advantage of that technique is that it does not require the complete measurement of the backscattered polarisation state evolution and only uses a linear polariser at the fibre input, which is quite simple to implement. The determination of the beat length, the coupling length and finally the PMD is based on the analysis of the statistical properties of the extrema present in a POTDR trace.

In said paper by Wuilpart et al. the spatial distribution of the linear birefringence δ is characterised by a Rayleigh statistical distribution along the fibre length and it is assumed that the rate of change of the birefringence angle q is described by a Gaussian distribution with zero mean and standard deviation σ depending on the polarisation mode coupling strength. The circular birefringence is neglected. A relationship between the coupling length $L_c$ and σ can be derived and one can obtain:

$$L_C = \frac{0.879}{\sigma^2}$$

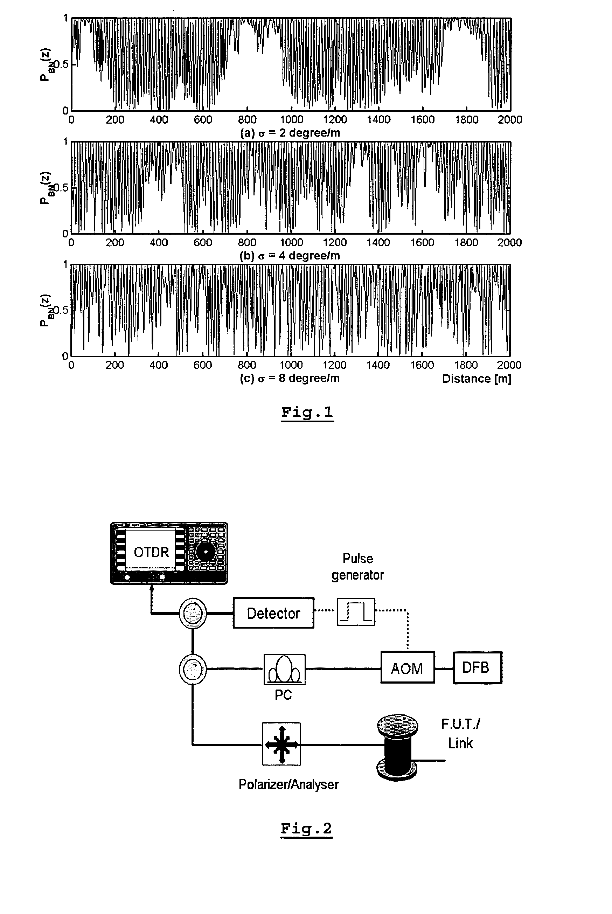

Fig. 1 shows different POTDR traces $P_{Bn}(z)$ obtained by simulation for an infinitely small pulse duration, for a beat length of 25 m and for different values of σ: 2, 4 and 8 degrees/m, respectively. One can observe that the lower envelope of the curves varies in a smoother way when σ decreases and therefore when $L_c$ increases. In the prior art a statistical approach is used for determining (an approximate value of) the coupling length from the POTDR trace. The polarisation mode dispersion (PMD) can (approximately) be derived from the previously determined approximations of beat length and coupling length.

Patent document WO 2005/041449-A1 proposes a method for determining in a more accurate way the spatial distribution of the beat length, the coupling length and the polarisation mode dispersion. The method further allows taking into account imperfections of the experimental set-up. The disclosed method comprises an iterative determination of a beat length interval and an interval for the polarisation mode coupling. When the length of the intervals drops below a predetermined value, accurate values for the beat length and the coupling length are obtained, from which in a subsequent step the PMD can be calculated.

Although the approach presented in WO 2005/041449-A1 provides more accuracy, it is found that the method performs best for relatively short optical links (e.g. in a range of 20 km). This is due to the short optical pulses (typical duration in the order of 10 ns) used for performing the method. The short pulses significantly limit the maximum measurable length. The curves described in document WO 2005/041449-A1 at Fig.6 indeed present a slope which decreases when the pulse length increases. Consequently, using long pulses significantly decreases the accuracy of the measured beat length. There is thus certainly a need for a method wherein longer pulses (>100 ns) can be used, as such an approach would allow to map the PMD along long optical fibre links (of e.g. about 100 km).

### Aims of the invention

The present invention aims to provide a method for determining the beat length, the coupling length and the PMD along an optical fibre link wherein pulses of any duration (but preferably longer than 100 ns) can be used.

### Summary of the invention

The present invention relates to a method for characterising an optical fibre link by its beat length, coupling length and polarisation mode dispersion distribution, comprising the steps of :

- sending a pulsed signal along the optical fibre link and measuring the backscattered signal, after passing through a polariser,
- deriving the mean value of the backscattered signal and the number of times the backscattered signal crosses the mean value,
- determining an estimation of the coupling length, taking into account the length of the optical fibre link,
- dividing the backscattered signal in a plurality of sections, deriving for each section the section mean value and the number of times $N_i$ said section mean value is crossed in the section and calculating the sum of the $N_i$ of the various sections of the plurality of sections,
- determining an estimation of the beat length from the information derived in the previous step and from the estimated coupling length,

- calculating the polarisation mode dispersion.

In a preferred embodiment the backscattered signal is a POTDR signal. In an advantageous embodiment the pulsed signal has a duration longer than 100 ns. The polariser is preferably a linear polariser.

The various sections advantageously are of equal length.

Optionally the method comprises a further step of deriving the length of said optical fibre.

In a further aspect the invention relates to a method for characterising an optical link consisting of a concatenation of several fibres, wherein the method as previously described is applied to each fibre.

In a specific aspect the invention relates to the use of method as described to locate the position of polarisation mode dispersion sources within an optical fibre link. The method according to the invention can advantageously be used in telecommunication networks or in fibre sensing applications.

### Short description of the drawings

Fig. 1 represents simulated POTDR traces for a given beat length and different values of σ.

Fig. 2 represents the set-up for measuring a POTDR trace.

Fig. 3 represents a POTDR trace for a concatenation of 3 fibres.

Fig. 4 represents a curve in thin line describing the POTDR trace obtained for an infinitely small pulse duration and the thick curve corresponding to the POTDR trace obtained with 500ns pulses.

Fig. 5 represents the evolution of $L_c$ with $L/N_m$ for different values of the beat length $L_B$.

Fig. 6 represents the evolution of $L_B$ with $L/N_{md}$ for different values of $L_c$ and for $\Delta l$ =25m.

### Detailed description of the invention

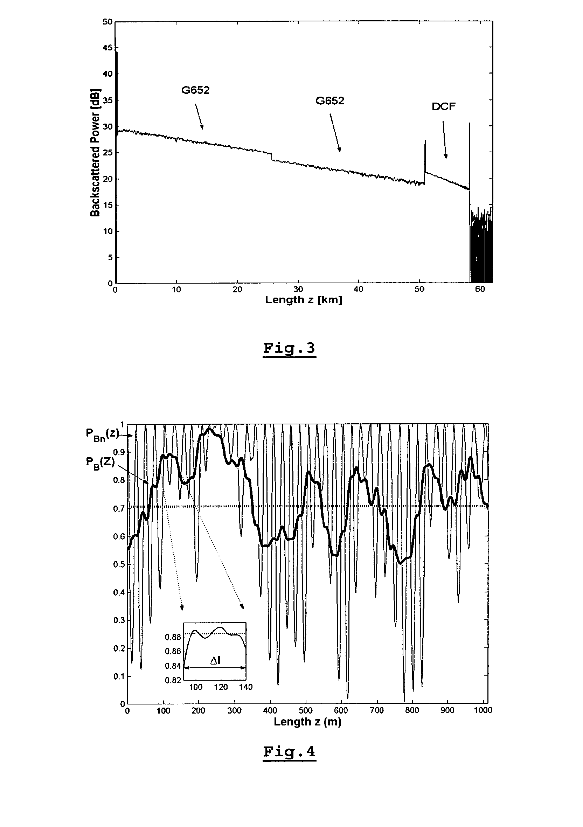

The measurement set-up is shown in Fig.2 and is similar to the one presented in WO2005/041449. A commercially available OTDR is used for the transmission and the synchronisation of the optical pulses and for the detection of the backscattered power. The OTDR optical pulses (preferably >100ns) are detected and the resulting electrical signal is used to externally modulate a DFB laser via a pulse generator and an acousto-optic modulator (AOM). A polariser is placed at the fibre input to fix the input state of polarisation and to analyse the backscattered signal. A polarisation controller (PC) is placed after the AOM to maximise the optical power at the fibre input. The coherence noise due to the high coherence of the source is reduced by varying the wavelength on a range of 1 nm during the measurement of a POTDR trace. Fig.3 shows an example of a typical POTDR trace (concatenation of 3 fibres).

As already mentioned, POTDR traces obtained with such a technique (and for an infinitely short pulse duration) show that the variation of the lower envelope gives information about the fibre coupling length: the lower envelope varies in a smoother way when $L_c$ increases (see Fig.1). The high-frequency oscillation in the POTDR trace is related to the birefringence and provides information about the fibre beat length.

When the simulations take into account the pulse duration of the measurement system, the resulting POTDR trace $P_B(z)$ corresponds to a sweeping average of the ideal trace $P_{Bn}(z)$ over a small length of fibre related to the pulse duration (50m in the case of 500ns pulses). Consequently, when the pulse duration increases, $P_B(z)$ becomes smoother and smoother. Fig. 4 shows $P_{Bn}(z)$ and $P_B(z)$ for $L_B$=50m, $L_c$=500m and a pulse duration of 500ns . One can clearly observe that the $P_B(z)$ is an average of $P_{Bn}(z)$ over a small length of fibre and that its main frequency evolution is related to the evolution of the lower envelope of the ideal POTDR trace $P_{Bn}(z)$. This can be explained by the averaging process, which alleviates the effect of the local birefringence: it is the polarisation mode coupling that mainly contributes to the POTDR signal shape.

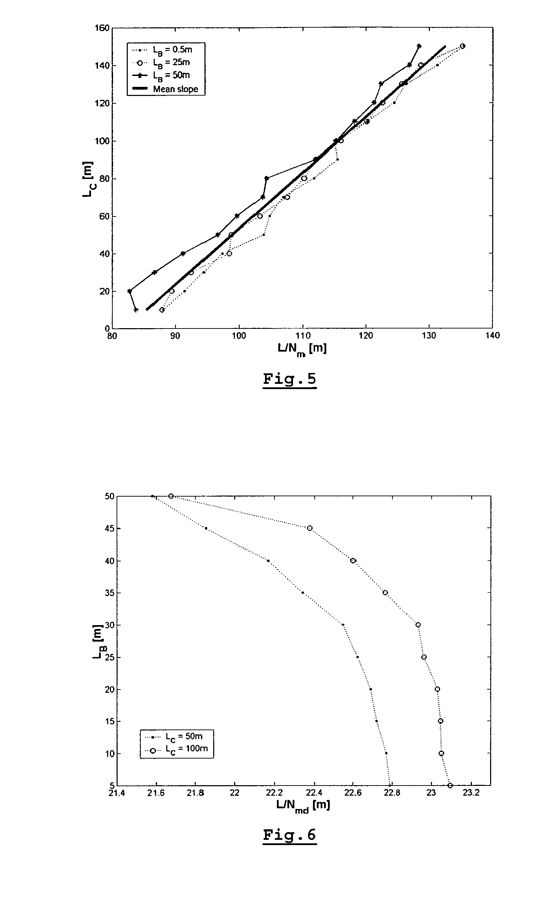

The frequency evolution of $P_B(z)$ may be described by $N_m$, the number of times $P_B(z)$ crosses its mean value (dashed line in Fig.4). Fig.5 shows the evolution of $L_c$ with $L/N_m$ (L being the fibre length) for different values of the beat length $L_B$. One can clearly observe that $L/N_m$ strongly depends on the coupling length while it slightly depends on $L_B$. In practice, $N_m$ can be easily measured and, supposing that $0.5<L_B<50m$, the fibre coupling length can then be estimated using the mean curve (thick slope in Fig. 5). Note that Fig. 5 has been obtained by simulations taking into account the characteristics of the measurement set-up, i.e. the rise time of the modulator, the time jitter introduced by the electronic equipment and the data sampling rate.

When zooming in on the POTDR trace $P_B(z)$ over a small fibre length $\Delta l$ as described in the inset of Fig:4, one can notice that a residual oscillating signal is still present after the averaging process. This oscillating signal contains information about the birefringence and the beat length of the fibre. The frequency evolution of $P_B(z)$ within $\Delta l$ may be described by the number of times $P_B(z)$ crosses its mean value (dashed line in the inset of figure 4). In practice, the POTDR trace is divided in (preferably equal) sections of length $\Delta l$ and a new parameter $N_{md}$ is calculated by

$$N_{md} = \Sigma_{i=1}^{n} N_i \qquad (eq.3)$$

where n is the number of sections and $N_i$ is the number of time $P_B(z)$ crosses its mean value within the $i^{th}$ section of the trace. The evolution of $L_B$ with $L/N_{md}$ for different values of $L_c$ and for $\Delta l$ =25m is shown in Fig.6. One can clearly observe that $L/N_{md}$ gives information about $L_B$. In practice, $N_{md}$ can be easily measured and the beat length can then be determined using the curve of Fig.6 corresponding to the coupling length previously determined.

From the measurement of the beat length and the coupling length, it is easy to determine the PMD value by :

$$PMD^2 = \frac{1}{2}\left(\frac{\lambda}{cL_B}\right)^2 L_C^2 \left(\frac{2L}{L_C} - 1 + e^{-\frac{2L}{L_c}}\right)$$

where c denotes the light velocity in a vacuum, $\lambda$ the measurement wavelength and L the fibre length. This process can be repeated for each contribution in the POTDR signal corresponding to the different fibres of the optical link: it is therefore possible to map the PMD along this link.

The technique according to the present invention allows for PMD mapping in long optical fibre links. The technique is based on a single-wavelength Polarisation-OTDR set-up using a linear polariser at the fibre input and is quite simple to implement. The applied algorithm is based on a level-crossing rate analysis of the POTDR trace, which enables the distributed measurement of the beat length, the coupling length and the PMD. The algorithm allows using large pulses (>100ns), which significantly improves the measurement dynamic. Moreover, this technique does not require the complete measurement of the backscattered polarisation state.

## Claims

1. Method for characterising an optical fibre link by its beat length, coupling length and polarisation mode dispersion distribution, comprising the steps of

   - sending a pulsed signal along said optical fibre link and measuring the backscattered signal, after passing through a polariser,
   - deriving the mean value of said backscattered signal and the number of times said backscattered signal crosses said mean value,
   - determining an estimation of said coupling length, taking into account the length of said optical fibre link,
   - dividing said backscattered signal in a plurality of sections, deriving for each section the section mean value and the number of times $N_i$ said section mean value is crossed in said section and calculating the sum of the $N_i$ of the various sections of said plurality of sections,
   - determining an estimation of said beat length from the information derived in the previous step and from said estimated coupling length,
   - calculating the polarisation mode dispersion.

**2.** The method as in claim 1, wherein said backscattered signal is a POTDR signal.

**3.** The method as in claim 1 or 2, wherein said pulsed signal has a duration longer than 100 ns.

**4.** The method as in any claims 1 to 3, wherein said polariser is a linear polariser.

**5.** The method as in any of claims 1 to 4, wherein said sections are of equal length.

**6.** The method as in any of claims 1 to 5, comprising a further step of deriving the length of said optical fibre.

**7.** Method for characterising an optical link consisting of a concatenation of several fibres, by applying the method as in any of the previous claims to each fibre.

**8.** Use of method as in any of the previous claims to locate the position of polarisation mode dispersion sources within an optical fibre link.

**9.** Use of method as in any of the claims 1 to 8 in telecommunication networks.

**10.** Use of method as in any of the claims 1 to 8 in fibre sensing applications.

(a) σ = 2 degree/m

(b) σ = 4 degree/m

(c) σ = 8 degree/m                    Distance [m]

Fig.1

Fig.2

Fig.3

Fig.4

**Fig.5**

**Fig.6**

**European Patent Office**

## EUROPEAN SEARCH REPORT

Application Number

EP 06 44 7014

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GALTAROSSA A ET AL: "POLARIZATION-SENSITIVE REFLECTOMETRIC TECHNIQUES FOR PMD MEASUREMENTS" 25TH EUROPEAN CONFERENCE ON OPTICAL COMMUNICATION. (ECOC'99). NICE, FRANCE, SEPT. 27 - 30, 1999. REGULAR AND INVITED PAPERS, EUROPEAN CONFERENCE ON OPTICAL COMMUNICATION (ECOC), PARIS : SEE, FR, vol. VOL. II OF II, 26 September 1999 (1999-09-26), pages II-2, XP001035400 ISBN: 2-912328-12-8 * the whole document * | 1-10 | INV. H04B10/08 G01M11/00 |
| A | CORSI ET AL: "Beat Length Characterization Based on Backscattering Analysis in Randomly Perturbed Single-Mode Fibers" JOURNAL OF LIGHTWAVE TECHNOLOGY, vol. 17, no. 7, July 1999 (1999-07), pages 1172-1178, XP011029454 * the whole document * | 1-10 | |
| A | GALTAROSSA A ET AL: "IN-FIELD COMPARISON AMONG POLARIZATION-MODE-DISPERSION MEASUREMENT TECHNIQUES" JOURNAL OF LIGHTWAVE TECHNOLOGY, IEEE SERVICE CENTER, NEW YORK, NY, US, vol. 14, no. 1, January 1996 (1996-01), pages 42-49, XP000585241 ISSN: 0733-8724 * the whole document * | 1-10 | TECHNICAL FIELDS SEARCHED (IPC) H04B G01M |

-/--

The present search report has been drawn up for all claims

| Place of search | Date of completion of the search | Examiner |
|---|---|---|
| Munich | 29 May 2006 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 44 7014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GALTAROSSA A ET AL: "REFLECTOMETRIC MEASUREMENTS OF POLARIZATION PROPERTIES IN OPTICAL-FIBER LINKS" IEEE TRANSACTIONS ON INSTRUMENTATION AND MEASUREMENT, IEEE SERVICE CENTER, PISCATAWAY, NJ, US, vol. 53, no. 1, February 2004 (2004-02), pages 86-94, XP001198375 ISSN: 0018-9456 * the whole document * | 1-10 | |
| A | GALTAROSSA ET AL: "Measurement of Local Beat Length and Differential Group Delay in Installed Single-Mode Fibers" JOURNAL OF LIGHTWAVE TECHNOLOGY, vol. 18, no. 10, October 2000 (2000-10), pages 1389-1394, XP011029792 * the whole document * | 1-10 | |
| A | WO 2005/041449 A (FACULTE POLYTECHNIQUE DE MONS; WUILPART, MARC) 6 May 2005 (2005-05-06) * the whole document * | 1-10 | |
| A | WUILPART M ET AL: "PMD MEASUREMENT WITH A POLARIZATION-OTDR" ECOC 2002. 28TH. EUROPEAN CONFERENCE ON OPTICAL COMMUNICATION. COPENHAGEN, DENMARK, SEPT. 8 - 12, 2002, EUROPEAN CONFERENCE ON OPTICAL COMMUNICATION.(ECOC), vol. VOL. 4 OF 4. CONF. 28, 12 September 2002 (2002-09-12), page 933, XP001158413 * the whole document * | 1-10 | |

TECHNICAL FIELDS SEARCHED (IPC)

-/--

The present search report has been drawn up for all claims

| Place of search | Date of completion of the search | Examiner |
|---|---|---|
| Munich | 29 May 2006 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 06 44 7014

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUTTNER B ET AL: "DISTRIBUTED PMD MEASUREMENT WITH A POLARIZATION-OTDR IN OPTICAL FIBERS" JOURNAL OF LIGHTWAVE TECHNOLOGY, IEEE SERVICE CENTER, NEW YORK, NY, US, vol. 17, no. 10, October 1999 (1999-10), pages 1843-1848, XP001033243 ISSN: 0733-8724 * the whole document * | 1-10 | |

-----

TECHNICAL FIELDS SEARCHED (IPC)

The present search report has been drawn up for all claims

| Place of search | Date of completion of the search | Examiner |
|---|---|---|
| Munich | 29 May 2006 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 44 7014

This annex lists the patent family members relating to the patent documents cited in  the above-mentioned European search report.
The members are as contained in the European Patent Office EDP file on
The European Patent Office is in no way liable for these particulars which are merely  given for the purpose of information.

29-05-2006

| Patent document cited in search report | Publication date | Patent family member(s) | Publication date |
|---|---|---|---|
| WO 2005041449          A | 06-05-2005 | NONE | |

For more details about this annex : see Official Journal of the  European Patent Office, No. 12/82

## EP 1 811 694 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030174312 A
- WO 2005041449 A1
- WO 2005041449 A

**Non-patent literature cited in the description**

- **A. ROGERS.** Polarization-optical time domain reflectometry: a technique for the measurement of field distributions. *Applied Optics,* 1981, vol. 20, 1060-1074
- **H. SUNNERUD et al.** Polarization-Mode Dispersion measurements along installed optical fibers using gated backscattered light and a polarimeter. *J. of Lightwave Technol.,* 2000, vol. 18, 897-904

- **M. LEBLANC.** Distributed detection of high-PMD sections on installed fibers using a polarization-OTDR. *Proc. OFMC'01,* 2001, 155-162
- **GALTAROSSA et al.** Measurement of birefringence correlation length in long, single-mode fibers. *Opt. Lett.,* 2001, vol. 26, 962-964
- **M. WUILPART ; G. RAVET ; P. MÉGRET ; M. BLONDEL.** Polarization mode dispersion mapping in optical fibers with a Polarization-OTDR. *Photon. Technol. Lett.,* 2002, vol. 14, 1716-1718